# EUROPÄISCHE PATENTSCHRIFT

(11) **EP 2 577 106 B1**
(45) Veröffentlichungstag und Bekanntmachung des Hinweises auf die Patenterteilung: **09.08.2017**
(21) Anmeldenummer: 11706257.0
(22) Anmeldetag: 03.03.2011
(51) Int. Cl.: F16H 45/02

(54) **HYDRODYNAMISCHE KOPPLUNGSEINRICHTUNG**
HYDRODYNAMIC COUPLING DEVICE
APPAREIL HYDRODYNAMIQUE DE COUPLAGE

(30) Priorität: 25.05.2010 DE 102010029255
(43) Veröffentlichungstag der Anmeldung: 10.04.2013
(73) Patentinhaber: ZF Friedrichshafen AG, 88046 Friedrichshafen (DE)
(72) Erfinder: DÖGEL, Thomas, 97720 Nüdlingen (DE); KÜHNER, Michael, 74078 Heilbronn (DE); HOFFELNER, Ingrid, 97478 Knetzgau (DE)
(86) Internationale Anmeldenummer: PCT/EP2011/053189
(87) Internationale Veröffentlichungsnummer: WO 2011/147598

(56) Entgegenhaltungen:
- DE-A1- 19 835 758
- DE-A1-102008 034 557
- DE-A1-102008 057 648
- DE-A1-102009 035 914
- GB-A- 2 346 194
- US-A1- 2002 033 310
- US-A1- 2009 125 202
- US-B1- 6 231 472

## Beschreibung

Die vorliegende Erfindung betrifft eine nasslaufende Kupplungsanordnung, wie sie beispielsweise im Antriebsstrang eines Fahrzeugs eingesetzt werden kann, siehe zum Beispiel die US-A-2002/033310. Vor allem bei mit Brennkraftmaschinen aufgebauten Antriebssträngen kann bedingt dadurch, dass in Brennkraftmaschinen periodisch Zündungen auftreten und die dabei freigesetzte Energie in eine Drehbewegung der Kurbelwelle umgesetzt wird, grundsätzlich kein konstantes Drehmoment in einen Antriebsstrang eingeleitet werden. Sowohl das von der Kurbelwelle abgegebene Drehmoment, als auch deren Drehzahl unterliegt Schwankungen bzw. Schwingungen, allgemein Drehungleichförmigkeiten. Da derartige Drehungleichförmigkeiten im Fahrbetrieb spürbar sein können, besteht allgemein die Zielsetzung, diese so weit als möglich zu eliminieren.

Beispielsweise ist es bekannt, durch den Einsatz von Kraft- bzw. Energiespeichern, also beispielsweise Federn oder sich bewegende Massen oder Kombinationen daraus, die bei derartigen Drehungleichförmigkeiten auftretenden Energien vorübergehend zu speichern und sie dann so in den Antriebsstrang weiterzugeben, dass ein geglätteter Drehzahl- bzw. Drehmomentenverlauf erreicht werden kann. Als drehzahladaptive Tilger bekannte Massenpendel setzen die im Fahrzustand auftretenden Drehungleichförmigkeiten in oszillierende Auslenkungen von Schwingungsmassen um, wobei die Auslenkung entgegen der Fliehkraft erfolgt und durch Vorgabe der Auslenkungsbahn bzw. auch der auszulenkenden Massen eine Abstimmung auf bestimmte Anregungsdrehzahlen bzw. Anregungsfrequenzen erreicht werden kann. Derartige Tilger können selbstverständlich mit durch Einsatz von Federn oder dergleichen schwingenden Massensystemen kombiniert werden.

Auf Grund der im modernen Fahrzeugbau immer beengter werdenden Platzverhältnisse steht auch für die zur Schwingungsdämpfung eingesetzten Systeme weniger Bauraum mit entsprechenden Einbußen in der Entkopplungsgüte, also der Verringerung der auftretenden Drehungleichförmigkeiten, zur Verfügung.

Es ist die Aufgabe der vorliegenden Erfindung, eine verbesserte nasslaufende Kupplungsanordnung, insbesondere für einen Antriebsstrang mit einem Automatikgetriebe, bereitzustellen, welche eine verbesserte Verringerung von in einen Antriebsstrang eingeleiteten Drehungleichförmigkeiten erreicht.

Erfindungsgemäß wird diese Aufgabe gelöst durch eine nasslaufende Kupplungsanordnung, insbesondere für den Antriebsstrang eines Fahrzeugs, umfassend eine mit Fluid gefüllte oder füllbare Gehäuseanordnung, eine mit der Gehäuseanordnung um eine Drehachse drehbare erste Reibflächenformation, eine mit einem Abtriebsorgan um die Drehachse drehbare und durch einen Kupplungskolben in Reibeingriff mit der ersten Reibflächenformation bringbare zweite Reibflächenformation, wobei im Drehmomentübertragungsweg zwischen der Gehäuseanordnung und dem Abtriebsorgan wenigstens ein Teil einer Drehschwingungsdämpfungsanordnung vorgesehen ist, diese umfassend einen Eingangsbereich und einen Ausgangsbereich, wobei zwischen dem Eingangsbereich und dem Ausgangsbereich ein erster Drehmomentübertragungsweg und parallel dazu ein zweiter Drehmomentübertragungsweg sowie eine Kopplungsanordnung zur Überlagerung der über die Drehmomentübertragungswege geleiteten Drehmomente vorgesehen sind, wobei die Drehschwingungsdämpfungsanordnung ferner wenigstens im ersten Drehmomentübertragungsweg eine Phasenschieberanordnung umfasst zur Erzeugung einer Phasenverschiebung von über den ersten Drehmomentübertragungsweg geleiteten Drehungleichförmigkeiten bezüglich über den zweiten Drehmomentübertragungsweg geleiteten Drehungleichförmigkeiten, wobei die nasslaufende Kupplungsanordnung so ausgebildet ist, dass durch ein Aufheben des Reibeingriffs zwischen den Reibflächenformationen (106, 114) im Wesentlichen kein Drehmoment über die nasslaufende Kupplungsanordnung übertragen wird.

Bei der erfindungsgemäßen nasslaufenden Kupplungsanordnung wird durch Einsatz der Phasenschieberanordnung dafür gesorgt, dass zunächst durch Aufteilung und dann wieder Zusammenführung des übertragenen Drehmoments durch die dabei eingeführte Phasenverschiebung eine destruktive Überlagerung von Schwingungsanteilen in dem zu übertragenden Drehmoment auftritt. Im Idealfalle findet zumindest in einem besonders kritischen Frequenzbereich eine nahezu vollständige Eliminierung der Drehungleichförmigkeiten statt. Durch das Integrieren wenigstens der Kopplungsanordnung in eine mit Fluid gefüllte oder füllbare Gehäuseanordnung wird die Möglichkeit geschaffen, durch das Fluid und den durch dieses eingeführten Schmiereffekt, insbesondere dann, wenn das Fluid Öl ist, den Verschleiß insbesondere im Bereich der Kopplungsanordnung zu mindern. Auch kann ein Einfluss auf das Dämpfungsverhalten genommen werden, da sich bewegende Komponenten entgegen dem Widerstand des Fluids zu bewegen sind und dabei Energie dissipiert wird. Dabei kann vorgesehen sein, dass die Gehäuseanordnung wenigstens einen Teil der Phasenschieberanordnung umschließt. Bei einer alternativen Variante kann wenigstens ein Teil Phasenschieberanordnung außerhalb der Gehäuseanordnung angeordnet sein.

Bei der erfindungsgemäß aufgebauten nasslaufenden Kupplungsanordnung können die erste Reibflächenformation und die zweite Reibflächenformation im Drehmomentenfluss zwischen der Gehäuseanordnung und der Drehschwingungsdämfpungsanordnung oder der Drehschwingungsdämfpungsanordnung und dem Abtriebsorgan vorgesehen sein.

Bei einer alternativen Ausgestaltungsvariante kann vorgesehen sein, dass die erste Reibflächenformation und die zweite Reibflächenformation im Drehmomentenfluss zwischen der Phasenschieberanordnung und der Kopplungsanordnung vorgesehen sind. Ist durch das Aufheben des Reibeingriffs zwischen den Reibflächenformationen eine Verbindung zwischen der Phasenschieberanordnung und der Kopplungsanordnung unterbrochen, so kann über die nasslaufende Kupplungsanordnung im Wesentlichen kein Drehmoment übertragen werden.

Bei einer weiteren alternativen Variante wird vorgeschlagen, dass die erste Reibflächenformation und die zweite Reibflächenformation im Drehmomentenfluss zwischen der Gehäuseanordnung und der Kopplungsanordnung vorgesehen sind. Dabei kann beispielsweise der erste Drehmomentübertragungsweg fest an die Gehäuseanordnung angekoppelt sein. Durch das wahlweise Aufheben und Herstellen des Reibeingriffs der beiden Reibflächenformationen im zweiten Drehmomentübertragungsweg kann dann der Drehmomentenfluss über die nasslaufende Kupplungsanordnung entsprechend unterbrochen bzw. hergestellt werden.

Jede der Reibflächenformationen kann wenigstens ein mit einem ringscheibenartigen Reibelement der anderen Reibflächenformation durch den Kupplungskolben in Reibeingriff pressbares Reibelement umfassen.

Um diese Phasenverschiebung bei baulich einfacher Weise effizient erreichen zu können, wird vorgeschlagen, dass die Phasenschieberanordnung ein Schwingungssystem mit einer Primärseite und einer gegen die Wirkung einer Federanordnung bezüglich der Primärseite um die Drehachse drehbaren Sekundärseite umfasst.

Die Phasenschieberanordnung ist somit im Wesentlichen nach dem Funktionsprinzip eines Zweimassenschwingers aufgebaut, bei welchem zwei gegen die Wirkung der Federanordnung bezüglich einander schwingende Massen, also im Wesentlichen die Primärseite und die Sekundärseite, durch Auswahl der Federsteifigkeit einerseits und der Massenverhältnisse bzw. der Massenträgheit an der Primärseite und der Sekundärseite andererseits mit einem gewünschten Schwingungsverhalten bereitgestellt werden. Charakteristisch ist, dass ein derartiges Schwingungssystem eine Resonanzfrequenz aufweist. Im Frequenzbereich unter der Resonanzfrequenz schwingt ein derartiges Schwingungssystem unterkritisch, d.h. Anregung und Reaktion des Systems treten im Wesentlichen gleichzeitig auf. Mit Überschreiten der Resonanzfrequenz tritt ein Phasensprung auf, so dass im Wesentlichen Anregung und Reaktion des Systems zueinander phasenverschoben auftreten, das System also überkritisch arbeitet. Diesen Phasensprung, der im Idealfalle bei einem Maximalwert von 180° liegt, nutzt die vorliegende Erfindung, um durch Überlagerung des so phasenverschobenen Drehmomentenschwingungsanteils mit dem nicht phasenverschobenen Drehmomentenschwingungsanteil die gewünschte Minderung der Drehungleichförmigkeiten zu erreichen.

Um ein weiter verbessertes Schwingungsdämpfungsverhalten im Drehmomentübertragungsweg zu dem Abtriebsorgan erreichen zu können, wird vorgeschlagen, dass der Ausgangsbereich ein weiteres Schwingungssystem mit einer Primärseite und einer gegen die Wirkung einer Federanordnung bezüglich der Primärseite drehbaren Sekundärseite umfasst.

Das Abtriebsorgan kann beispielsweise eine mit einer Abtriebswelle, vorzugsweise Getriebeeingangswelle zur gemeinsamen Drehung um die Drehachse gekoppelte oder koppelbare Abtriebsnabe umfassen.

Die Versorgung der Gehäuseanordnung mit Fluid kann beispielsweise dadurch sichergestellt werden, dass die Gehäuseanordnung eine Antriebsformation zum Antreiben einer Fluidpumpe zum Fördern von Fluid in die Gehäuseanordnung umfasst. Immer dann, wenn die Gehäuseanordnung zur Drehung um die Drehachse angetrieben wird, kann auf diese Art und Weise auch eine Fluidpumpe aktiviert werden und somit sichergestellt werden, dass im Betrieb die Gehäuseanordnung ausreichend mit Fluid gefüllt ist.

Bei einer baulich sehr einfachen, kompakt zu realisierenden Ausgestaltungsvarianten wird vorgeschlagen, dass die Kopplungsanordnung eine Planetengetriebeanordnung umfasst. Hierzu kann beispielsweise vorgesehen sein, dass die Planetengetriebeanordnung einen an den zweiten Drehmomentübertragungsweg angebundenen Planetenradträger mit einer Mehrzahl von daran drehbar getragenen Planetenrädern umfasst. Es sei hier darauf hingewiesen, dass die Planetenräder als im Wesentlichen kreisrunde, also mit voll umlaufender Verzahnung ausgebildete Räder ausgebildet sein können, oder alternativ aber auch als Segmenträder ausgebildet sein können.

Um die Planetengetriebeanordnung bzw. deren Planetenräder zur Zusammenleitung der über die beiden Drehmomentübertragungswege geleiteten Drehmomente bzw. Drehmomentanteile in einfacher Weise nutzen zu können, wird vorgeschlagen, dass die Planetengetriebeanordnung eine an den ersten Drehmomentübertragungsweg angebundene erste Koppelradanordnung in Kämmeingriff mit den Planetenrädern und eine an den Ausgangsbereich angebundene zweite Koppelradanordnung in Kämmeingriff mit den Planetenrädern umfasst.

Eine Beeinflussung der über die beiden Drehmomentübertragungswege zu übertragenden Drehmomente bzw. Drehmomentanteile kann dadurch erfolgen, dass die erste Koppelradanordnung in Verbindung mit den Planetenrädern und die zweite Koppelradanordnung in Verbindung mit den Planetenrädern zueinander unterschiedliche Übersetzungsverhältnisse bereitstellen.

Die erste Koppelradanordnung und die zweite Koppelradanordnung können jeweils als Hohlradanordnung ausgebildet sein, also mit den Planetenrädern in deren radial äußeren Bereich zusammenwirken. Alternativ kann vorgesehen sein, dass die erste Koppelradanordnung und die zweite Koppelradanordnung jeweils eine Sonnenradanordnung umfasst.

Zur weiteren Beeinflussung des Schwingungsdämpfungsverhaltens kann vorgesehen sein, dass das Schwingungssystem oder/und das weitere Schwingungssystem wenigstens zwei zueinander seriell angeordnete Schwingungsdämpfer jeweils mit einer Primärseite und einer bezüglich dieser drehbaren Sekundärseite umfasst. Alternativ oder zusätzlich kann vorgesehen sein, dass das Schwingungssystem oder/und das weitere Schwingungssystem wenigstens zwei zueinander parallel wirksame Schwingungsdämpfer jeweils mit einer Primärseite und einer bezüglich dieser drehbaren Sekundärseite umfasst.

Wenn das Schwingungssystem oder/und das weitere Schwingungssystem eine drehzahladaptive Schwingungsdämpfungsanordnung mit wenigstens einer in Umfangsrichtung aus einer Grundlage auslenkbaren und dabei ihren Abstand zur Drehachse verändernde Auslenkungsmasse umfasst, wird es weiter möglich, das Schwingungsdämpfungsverhalten an spezielle Anregungsfrequenzen bzw. Ordnungen derselben anzupassen.

Bei einer alternativen Ausgestaltungsvariante kann dies dadurch erreicht werden, dass das Schwingungssystem oder/und das weitere Schwingungssystem eine Festfrequenz-Schwingungsdämpfungsanordnung mit wenigstens einer gegen die Wirkung einer Rückstellfederanordnung auslenkbaren Schwingungsmasse umfasst.

Weiter kann das Schwingungsdämpfungsverhalten dadurch vorteilhaft beeinflusst werden, dass dem Schwingungssystem oder/und dem weiteren Schwingungssystem eine einer Relativdrehung zwischen Primärseite und Sekundärseite desselben entgegenwirkende Reibungsdämpfungsanodnung zugeordnet ist.

Die vorliegende Erfindung wird nachfolgend mit Bezug auf die beiliegenden Figuren detailliert beschrieben. Es zeigt:
Fig.1 eine Teil-Längsschnittansicht einer nasslaufenden Kupplungsanordnung, die nicht Teil der Erfindung ist.
Fig. 2 eine der Fig. 1 entsprechende Darstellung, in welcher die Fluidströmungen im Inneren der Gehäuseanordnung der nasslaufenden Kupplungsanordnung verdeutlicht sind;
Fig. 3 eine prinzipartige Teil-Längsschnittansicht einer nasslaufenden Kupplungsanordnung mit einer Drehschwingungsdämpfungsanordnung;
Fig.4 eine Teil-Längsschnittansicht einer nasslaufenden Kupplungsanordnung mit einer Drehschwingungsdämpfungsanordnung;
Fig. 5 eine der Fig. 3 entsprechende Darstellung einer alternativen Ausgestaltungsart;
Fig. 6 eine der Fig. 3 entsprechende Darstellung einer alternativen Ausgestaltungsart;
Fig. 7 eine der Fig. 3 entsprechende Darstellung einer alternativen Ausgestaltungsart;
Fig. 8 eine der Fig. 3 entsprechende Darstellung einer alternativen Ausgestaltungsart;
Fig. 9 eine der Fig. 3 entsprechende Darstellung einer alternativen Ausgestaltungsart;
Fig. 10 eine der Fig. 3 entsprechende Darstellung einer alternativen Ausgestaltungsart;
Fig. 11 eine Teil-Längsschnittansicht einer nasslaufenden Kupplungsanordnung mit einer Drehschwingungsdämpfungsanordnung;
Fig. 12 eine der Fig. 3 entsprechende Darstellung einer alternativen Ausgestaltungsart;
Fig. 13 eine der Fig. 3 entsprechende Darstellung einer alternativen Ausgestaltungsart;
Fig. 14 eine der Fig. 3 entsprechende Darstellung einer alternativen Ausgestaltungsart;
Fig. 15 eine der Fig. 3 entsprechende Darstellung einer alternativen Ausgestaltungsart.

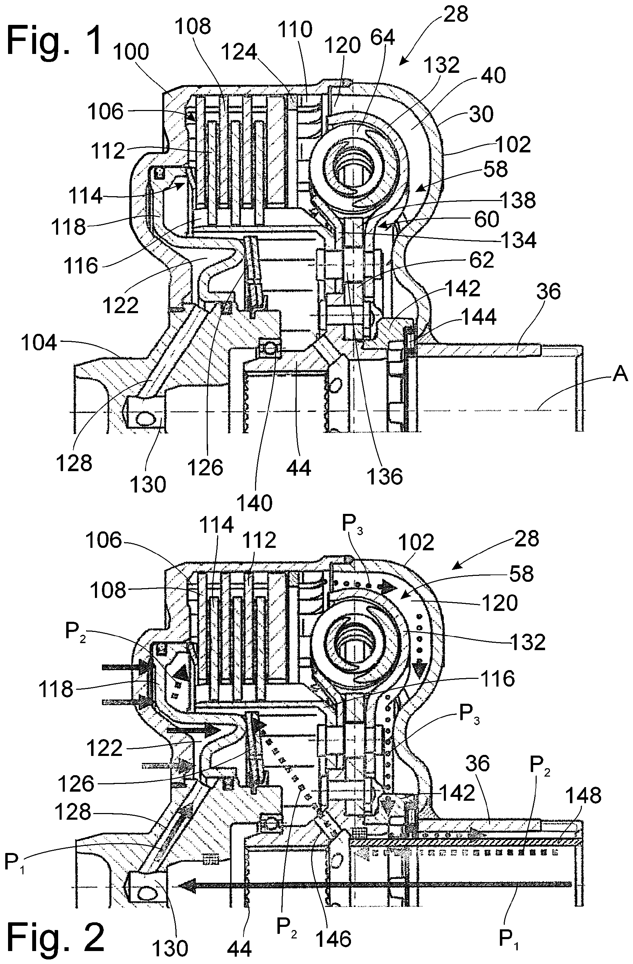

In Fig. 1 ist im Teil-Längsschnitt eine nasslaufende Kupplungsanordnung 28 für den Antriebsstrang eines Fahrzeugs dargestellt. Diese umfasst ein Gehäuse 30 mit einer motorseitigen Gehäuseschale 100 und einer getriebeseitigen Gehäuseschale 102, welche radial außen beispielsweise durch Verschweißung fest verbunden sind. Mit der getriebeseitigen Gehäuseschale 102 ist eine in ein Getriebe eingreifend zu positionierende Pumpenantriebsnabe 36 beispielsweise durch Verschweißung verbunden. Mit der motorseitigen Gehäuseschale 100 ist eine allgemein mit 104 bezeichnete Gehäusenabe durch Verschweißung verbunden. Somit ist der Innenraum 40 des Gehäuses 30 im Wesentlichen fluiddicht abgekapselt. Eine Fluidaustauschverbindung mit einem Getriebe besteht nur durch den durch die Pumpenantriebsnabe 36 umschlossenen Volumenbereich.

Im Innenraum 40 ist eine erste Reibflächenformation 106, umfassend eine Mehrzahl lamellenartiger, ringscheibenartiger erster Reibelemente 108, vorgesehen. Diese sind radial außen mit einer Verzahnungsformation ausgebildet und stehen damit in Drehkopplungseingriff mit einer an der motorseitigen Gehäuseschale 100 gebildeten verzahnungsartigen Eingriffsformation 110. Dabei sind die ersten Reibelemente 108 in Richtung einer Drehachse A grundsätzlich bezüglich des Gehäuses 30 bewegbar. Zwischen zwei ersten Reibelementen 108 liegt jeweils ein lamellenartiges, ringscheibenartiges zweites Reibelement 112 einer zweiten Reibflächenformation 114. Diese zweiten Reibelemente 112 weisen in ihrem radial inneren Bereich eine Verzahnungskonfiguration auf und stehen damit in Drehkopplungseingriff mit einem Reibelemententräger 116, sind bezüglich diesem jedoch in Richtung der Drehachse A grundsätzlich bewegbar.

Ein Kupplungskolben 118 ist radial außen an der motorseitigen Gehäuseschale 100 und radial innen an der Gehäusenabe 104 fluiddicht axial bewegbar geführt und teilt den Innenraum 40 in einen die Reibflächenformationen 106, 114 enthaltenden ersten Raumbereich 120 und einen zweiten Raumbereich 122 auf. Durch nachfolgend noch erläuterte Fluidzufuhr in den zweiten Raumbereich 122 kann der Kupplungskolben 118 axial auf die Reibflächenformationen 106, 114 zu bewegt werden und dabei die ersten Reibelemente 108 und die zweiten Reibelemente 112 in gegenseitigen Reibeingriff bringen. Das Widerlager bildet das in axialer Richtung am weitesten vom Kupplungskolben 118 entfernt liegende Reibelement der Reibelemente 108, welches durch einen Stützring 124 axial festgehalten ist. Durch eine bezüglich der Gehäusenabe 104 abgestützte Vorspannformation 126, beispielsweise umfassend eine Mehrzahl von Tellerfedern oder dergleichen, ist der Kupplungskolben 118 in Richtung minimales Volumen des zweiten Raumbereich 122, also grundsätzlich in Richtung Ausrücken, vorgespannt. Die Fluidzufuhr zu dem zweiten Raumbereich 122 bzw. aus diesem erfolgt über in der Gehäusenabe 104 gebildete Kanäle 128, die nach radial innen führen und dort in eine axial zum Innenraum 40 offene Öffnung 130 einmünden.

Im Innenraum 40 ist ein allgemein mit 58 bezeichneter Torsionsschwingungsdämpfer vorgesehen. Eine Primärseite 60 desselben umfasst zwei in Axialabstand zueinander liegende Deckscheibenelemente 132, 134, die in ihrem radial inneren Bereich durch Nietbolzen 136 miteinander und auch mit dem Reibelemententräger 116 verbunden sind. Axial zwischen den beiden Deckscheibenelementen 132, 134 der Primärseite 60 liegt ein Zentralscheibenelement 138 einer Sekundärseite 62 des Torsionsschwingungsdämpfers 58. Das Zentralscheibenelement 138 ist radial innen beispielsweise durch Vernietung, ggf. aber auch integrale Ausgestaltung, mit einem als Abtriebsnabe ausgebildeten Abtriebsorgan 44 fest verbunden.

Zur Drehmomentübertragung sind die Primärseite 60 und die Sekundärseite 62 vermittels einer Federeinheit 64 gekoppelt. Diese umfasst eine oder mehrere in Umfangssrichtung aufeinander folgende Federn bzw. Federgruppen, die sich an den Deckscheibenelementen 132, 134 einerseits und am Zentralscheibenelement 138 andererseits abstützen können und unter Kompression einer Relativdrehung zwischen der Primärseite 60 und der Sekundärseite 62 zulassen.

Das Abtriebsorgan 44, welches mit einer Innenumfangsverzahnung versehen ist und auf diese Weise mit einer Abtriebswelle, beispielsweise einer Getriebeeingangswelle, zur gemeinsamen Drehung koppelbar ist, ist bezüglich der Gehäusenabe 104 durch ein Lager 140 axial oder/und radial abgestützt. Das Lager 140 kann als Wälzkörperlager ausgebildet sein, kann selbstverständlich aber auch als Gleitlagerung ausgebildet sein. In der anderen axialen Richtung ist das Abtriebsorgan 44 über einen Stützring 142 und ein weiteres Lager 144 axial abgestützt bzw. gelagert, so dass insbesondere auch für den Torsionsschwingungsdämpfer 58 eine definierte Positionierung im Gehäuse 30 sowohl in axialer Richtung, als auch in radialer Richtung vorgegeben ist.

Die Fig. 2 veranschaulicht die verschiedenen in der nasslaufenden Kupplungsanordnung 28 im Betrieb auftretenden Fluidströmungen. Wie bereits vorangehend angedeutet, kann über die axial offene Öffnung 130 und die Kanäle 128 der zweite Raumbereich 122 mit Druckfluid gespeist werden, was durch die Strömungspfeile P₁ in Fig. 2 veranschaulicht ist. Dabei kann das Fluid in Richtung zur axial offenen Öffnung 130 durch eine zentrale Öffnung in einer Getriebeeingangswelle hindurch geführt werden. Durch Fluidzufuhr zum zweiten Raumbereich 122 und den somit entstehenden Fluiddruck entsteht eine den Kupplungskolben 118 entgegen der Vorspannwirkung der Vorspannanordnung 126 in Richtung Einrücken belastende Kraft.

Um aus dem Bereich der Reibflächenformationen 106, 114 Wärme abzuführen, was insbesondere im Schlupfbetrieb erforderlich ist, kann, wie durch Strömungspfeile P₂ angedeutet, durch in dem Abtriebsorgan 44 vorgesehene Öffnungen 146 hindurch Fluid in den ersten Raumbereich 120 eingeleitet werden. Dieses Fluid tritt radial nach außen in einen Volumenbereich zwischen dem Kupplungskolben 118 und dem Torsionsschwingungsdämpfer 58 bzw. auch dem Reibelemententräger 116 ein. Es findet eine Zwangsführung des Fluids nach radial außen in Richtung zu den Reibelementen 108, 112 und somit eine Zwangsumströmung desselben statt. Nach Umströmung der Reibelemente 108, 112 strömt das Fluid radial außen in Richtung zu einem zwischen dem Deckscheibenelement 132 und der Gehäuseschale 102 gebildeten Volumenbereich, wie durch Strömungspfeile P₃ angedeutet. Dabei gelangt das Fluid nach radial innen und kann durch nicht dargestellte Öffnungen im Stützring 142 hindurchtreten.

Um vor Einleitung des Fluids in den ersten Raumbereich 120 bzw. nach Abziehen des Fluids aus dem ersten Raumbereich 120 diese Fluidströme zu trennen, kann zwischen der nicht dargestellten Getriebeeingangswelle und der Pumpenantriebsnabe eine Trennhülse 148 vorgesehen sein, so dass zwischen dem Außenumfang der Getriebeeingangswelle und der Trennhülse 148 einerseits und zwischen der Trennhülse 148 und der Pumpenatriebsnabe 36 andererseits ringartige Strömungswege gebildet sind.

Um dabei die verschiedenen Strömungswege voneinander zu trennen, sind zwischen der Gehäusenabe 104 und der Getriebeeingangswelle, zwischen dem Abtriebsorgan 44 und der Stützhülse 148 sowie zwischen dem Kupplungskolben 118 und der Gehäuseschale 100 bzw. der Gehäusenabe 104 jeweils beispielsweise dynamische Dichtungen vorgesehen.

Man erkennt aus der vorangehenden Beschreibung, dass die in den Fig. 1 und 2 dargestellte nasslaufende Kupplungsanordnung 28 grundsätzlich von dem so genannten Drei-Leitungs-Typ ist. Über eine erste Leitung wird der zweite Raumbereich 122 mit Druckfluid versorgt bzw. Druckfluid aus diesem abgeführt, um somit durch Erhöhen des Fluiddrucks im zweiten Raumbereich 122 gegenüber dem Fluiddruck im ersten Raumbereich 120 den Kupplungskolben 118 in Richtung Einrücken zu pressen. Durch eine zweite Leitung, im Wesentlichen repräsentiert durch die Pfeile P₂, wird Fluid in den ersten Raumbereich 120 eingeführt, während durch eine dritte Leitung, repräsentiert durch die Pfeile P₃, Fluid aus dem ersten Raumbereich 120 abgezogen wird. Es kann selbstverständlich hier die Strömungsrichtung durch den ersten Raumbereich hindurch auch umgekehrt sein. Weiter ist darauf hinzuweisen, dass selbstverständlich die nasslaufende Kupplungsanordnung sowohl hinsichtlich der Fluidströmungsführung als auch hinsichtlich der Ausgestaltung insbesondere im Bereich der Reibflächenformationen in verschiedenster Weise variiert werden kann.

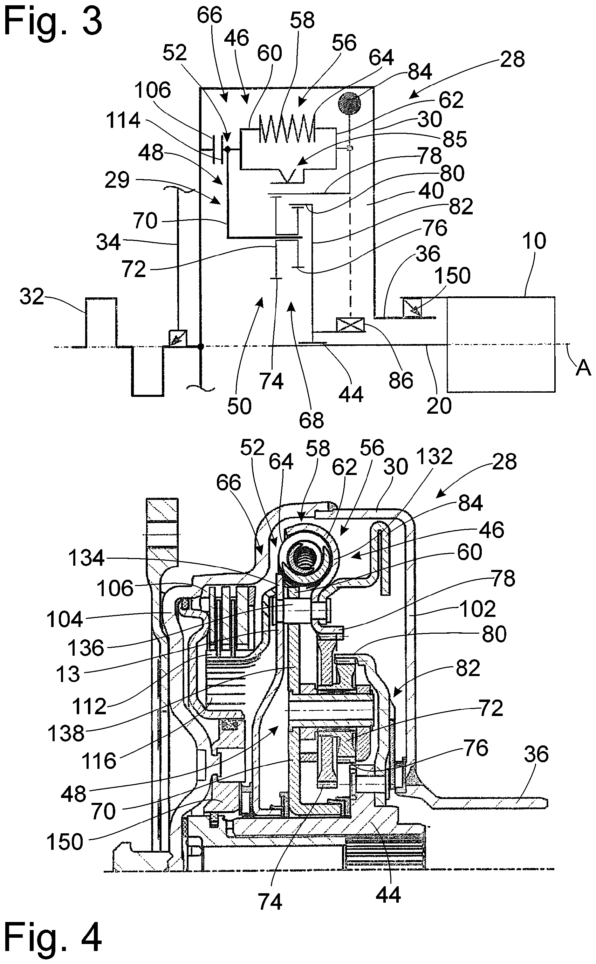

Nachfolgend wird mit Bezug auf die Fig. 3 bis 15 die vorliegende Erfindung hinsichtlich ihrer prinzipiellen Wirkungsweise bzw. auch konstruktiven Ausführung beschrieben. Es ist darauf hinzuweisen, dass diese nachfolgend erläuternden Erfindungsaspekte selbstverständlich realisiert sein können bei einer nasslaufenden Kupplungsanordnung wie sie vorangehend erläutert wurde. Insbesondere können die nachfolgend erläuterten zur Drehschwingungsdämpfung beitragenden konstruktiven Maßnahmen in den Drehmomentübertragungsweg zwischen den Reibflächenformationen und dem Abtriebsorgan integriert sein, also im Wesentlichen die Funktionalität des vorangehend erläuterten Torsionsschwingungsdämpfers ersetzen bzw. ergänzen.

Die in Fig. 3 prinzipartig dargestellte nasslaufende Kupplungsanordnung 28 umfasst das Gehäuse 30, welches antriebsseitig an eine Antriebswelle 32, beispielsweise die Kurbelwelle einer nur schematisch angedeuteten Brennkraftmaschine 34, angekoppelt bzw. ankoppelbar ist. Durch diese Kopplung ist das Gehäuse 30 zusammen mit dieser Antriebswelle 32 um eine Drehachse A drehbar, welche z. B. auch der Drehachse der Getriebeeingangswelle 20 entspricht.

An der dem Getriebe 10 zugewandten Seite weist das Gehäuse 30 eine Pumpenantriebsnabe 36 auf. Durch Rotation des Gehäuses 30 kann somit, ähnlich wie auch bei einem hydrodynamischen Drehmomentwandler, eine getriebeinterne Fluidpumpe aktiviert werden, und es kann Fluid in den Innenraum 40 des Gehäuses 30 gefördert bzw. daraus auch wieder abgezogen werden. Durch eine dynamische Dichtung 150 ist das Gehäuse 30 bzw. die Pumpenabtriebsnabe 36 bezüglich eines Getriebegehäuses abgedichtet, so dass der Innenraum 40 des Gehäuses 30 nach außen hin völlig abgekapselt ist.

Die nasslaufende Kupplungsanordnung 28 umfasst im Innenraum 40 des Gehäuses 30 das Abtriebsorgan 44, welches zur gemeinsamen Drehung mit der Getriebeeingangswelle 20 mit dieser gekoppelt oder koppelbar ist, beispielsweise durch Verzahnungseingriff. Zwischen dem Gehäuse 30 und dem Abtriebsorgan 44 existieren zwei Drehmomentübertragungswege 46, 48 einer Drehschwingungsdämpfungsanordnung 29, die im Bereich einer Kopplungsanordnung 50 vor dem als Abtriebsnabe ausgebildeten Abtriebsorgan 44 in einer Kopplungsanordnung 50 zusammengeführt werden und in einem Eingangsbereich 52 aufgezweigt sind. Der Eingangsbereich 52 ist an das Gehäuse 30 über die Reibflächenformationen 106, 114 angekoppelt bzw. ankoppelbar.

Im Eingangsbereich 52 zweigen sich die beiden Drehmomentübertragungswege 46, 48 auf. Der erste Drehmomentübertragungsweg 46 davon umfasst eine Phasenschieberanordnung 56, welche bewirkt, dass das über diesen ersten Drehmomentübertagungsweg 46 geleitete Drehmoment eine Phasenverschiebung bezüglich des über den zweiten Drehmomentübertragungsweg 48 geleiteten Drehmoments erfährt.

Die Phasenschieberanordnung 56 umfasst einen Torsionsschwingungsdämpfer 58 mit einer Primärseite 60, einer Sekundärseite 62 und einer einer Relativdrehung zwischen der Primärseite 60 und der Sekundärseite 62 entgegenwirkenden Federeinheit 64. Es sei hier darauf hingewiesen, dass der Torsionsschwingungsdämpfer 58 von herkömmlichem Aufbau sein kann und beispielsweise als Primärseite eine Nabenscheibe und als Sekundärseite zwei beidseits davon liegende und miteinander fest verbundene Deckscheibenelemente umfassen kann. Die Federeinheit 64 kann mehrere in Umfangsrichtung aufeinander folgende Federn, vorzugsweise Schraubendruckfedern, umfassen, die sich an der Primärseite 60 und der Sekundärseite 62 abstützend eine Rückstellkraft derselben bezüglich einander in Richtung zu einer Neutralrelativdrehlage bewirken. Der Torsionsschwingungsdämpfer 58 stellt also in dem in Fig. 3 dargestellten Ausgestaltungsbeispiel im Wesentlichen ein Schwingungssystem 66 bereit, welches im ersten Drehmomentübertragungsweg 46 zu einer Phasenverschiebung von darüber übertragenen Drehungleichförmigkeiten bzw. Drehmomentschwingungen führt. Dieses Schwingungssystem 66, weist bedingt durch die an der Primärseite 66 und der Sekundärseite 62 vorhandenen Massen, und die durch die Federeinheit 64 des Torsionsschwingungsdämpfers 58, welcher hier die Federanordnung des Schwingungssystems 66 bereitstellt, eine Eigenfrequenz bzw. Resonanzfrequenz auf. Bei Schwingungsanregungen unter dieser Eigenfrequenz werden zu übertragende Schwingungen im Wesentlichen ohne Phasenverschiebung übertragen. Wird die Resonanzfrequenz überschritten, tritt ein Phasensprung auf, der im Idealfalle und maximal 180° betragen kann, so dass anregende und weitergeleitete Schwingung zueinander gegenphasig verlaufen.

In der Kopplungsanordnung 50 werden die über die beiden Drehmomentübertragungswege 46, 48 geleiteten Drehmomente bzw. Drehmomentanteile wieder zusammengeführt. Hierzu ist die Kopplungsanordnung 50 als Planetengetriebeanordnung 68 ausgebildet und umfasst einen an den ersten Drehmomentübertragungsweg 48 angekoppelten Planetenradträger 70. Dieser trägt in Umfangsrichtung verteilt mehrere Planetenräder 72. Diese weisen zwei zueinander axial versetzt liegende Verzahnungen 74, 76 auf, die in dem in Fig. 3 dargestellten Ausgestaltungsbeispiel zueinander unterschiedliche Durchmesser bezogen auf die Rotationsachsen der Planetenräder 72 am Planetenradträger 70 aufweisen.

Ein erstes Hohlrad 78 ist mit der Sekundärseite 62 des Torsionsschwingungsdämpfers 58 bzw. des Schwingungssystems 66 verbunden und steht in Kämmeingriff mit den Verzahnungen 74 der Planetenräder 72. Ein zweites Hohlrad 80, welches im Wesentlichen auch einen Ausgangsbereich 82 der Drehschwingungsdämpfungsanordnung 46 bereitstellt, ist in Verzahnungseingriff mit den Verzahnungen 76 der Planetenräder 72. Das zweite Hohlrad 80 ist an das Abtriebsorgan 44 fest angebunden, so dass auch im Ausgangsbereich 82, also zwischen der Kopplungsanordnung 50 und dem Abtriebsorgan 44 der Drehmomentenfluss nicht wahlweise unterbrechbar bzw. herstellbar, sondern permanent eingerichtet ist. Dies gilt auch für den zwischen der Aufzweigung im Eingangsbereich 52 und der Zusammenführung der beiden Drehmomentübertragungswege 46, 48 im Bereich der Kopplungsanordnung 50 liegenden Bereich der Drehschwingungsdämpfungsanordnung 28. Die Sekundärseite 62 bzw. das damit gekoppelte Hohlrad 78 kann beispielsweise über eine Lagerung 86 am Ausgangsbereich 82 gelagert sein.

Die Planetengetriebeanordnung 68 bewirkt durch Zusammenwirkung der auf dem Planetenradträger 70 grundsätzlich frei drehbar getragenen Planetenräder 72 mit den beiden Hohlrädern 78, 80 eine Zusammenführung der über die beiden Drehmomentübertragungswege 46, 48 geleiteten Drehmomente. Enthalten diese Drehmomente Schwingungsanteile und ist die Frequenz dieser Schwingungs- bzw. Schwankungsanteile unter der Resonanzfrequenz des Schwingungssystems 66, so werden die beiden Drehmomente bzw. Drehmomentanteile in der Kopplungsanordnung 50 phasengleich zusammengeführt bzw. überlagert. Das in den Ausgangsbereich 82 weitergeleitete Drehmoment entspricht somit auch hinsichtlich seines Schwankungsverlaufs näherungsweise dem im Eingangsbereich 52 von der Überbrückungskupplung 54 aufgenommenen Drehmoment.

Liegt die Frequenz der Schwingungsanteile jedoch über der Resonanzfrequenz des Schwingungssystems 66, hier also des Torsionsschwingungsdämpfers 58, so überlagern sich die beiden über die Drehmomentübertragungswege 46, 48 geleiteten Schwingungsanteile der Drehmomente in der Kopplungsanordnung 50 destruktiv. Im Idealfalle, also bei einer Phasenverschiebung von 180°, kann hier eine vollständige Auslöschung der Schwingungsanteile erreicht werden, so dass das am Ausgangsbereich 82 aufgenommene Drehmoment einen im Wesentlichen geglätteten, zumindest aber deutlich schwingungsreduzierten Verlauf aufweist.

Um das Dämpfungsverhalten der Drehschwingungsdämfpungsanordnung 42 weiter beeinflussen zu können, kann beispielsweise der Sekundärseite 62 eine Zusatzmasse 84 zugeordnet sein, um somit die sekundärseitige Masse zu erhöhen und damit einen Einfluss auf die Resonanzfrequenz zu nehmen. Ferner kann dem Schwingungssystem 66 eine allgemein mit 85 bezeichnete Reibungsdämpfungsanordnung zugeordnet sein, die beispielsweise parallel zu der Federeinheit 64 zwischen der Primärseite 60 und der Sekundärseite 62 wirken kann und als Coulombsche Reibeinrichtung oder als Fluidreibeinrichtung ausgebildet sein kann. Das Bereitstellen einer derartigen parallel zur Federeinheit 64 wirksamen Reibungsdämpfungsanordnung 85 beeinflusst im Wesentlichen auch die Größe der durch Schwingungssystem 66 eingeführten Phasenverschiebung.

Durch die Ausgestaltung des Torsionsschwingungsdämpfers 58, also die Masse an der Primärseite 60, die Masse an der Sekundärseite 62, die Steifigkeit der Federeinheit 64 und die die sekundärseitige Masse unterstützende Zusatzmasse 84, wird im Allgemeinen einen möglichst niedrige Eigenfrequenz des Schwingungssystems 66 angestrebt, um somit bereits bei vergleichsweise niedrigen Frequenzen der Schwingungsanregungen, also bereits bei vergleichsweise niedriger Drehzahl, den Übergang in den überkritischen, also mit Phasenverschiebung arbeitenden Betriebszustand zu erlangen.

Dadurch, dass die beiden Verzahnungen 74, 76 zueinander unterschiedliche Durchmesser oder zumindest Wirkdurchmesser aufweisen, mithin also auch die beiden Hohlräder 78, 80 zueinander unterschiedliche Hohlräder aufweisen, wird es möglich, einen Einfluss auf die Verteilung der Drehmomente auf die beiden Drehmomentübertragungswege 46, 48 zu nehmen. Je näher die Durchmesser der Hohlräder 78, 80, somit also auch die Durchmesser der Verzahnungen 74, 76 beieinander liegen, desto mehr nähert sich der über den Drehmomentübertragungsweg 46 geleitete Drehmomentenanteil 100 % an. Bei dem in der Fig. 3 dargestellten Ausgestaltungsbeispiel mit größerem Durchmesser der Verzahnung 74, welche mit dem Hohlrad 78 zusammenwirkt, wird ein Übersetzungsverhältnis erreicht, das unter 1 liegt, bei umgekehrtem Größenverhältnis wird ein Übersetzungsverhältnis erreicht, das über 1 liegt. In ersterem Falle wird das über den ersten Drehmomentübertragungsweg 46 geleitete Drehmoment unter Ausnutzung einer Drehmomentflussumkehr im zweiten Drehmomentübertragungsweg 48 erhöht, und zwar unter Abstützung an der Kopplungsanordnung 50. Auch hierbei wird im Sinne der Erfindung eine destruktive Überlagerung der beiden Drehmomentflüsse in den Drehmomentübertragungswegen genutzt, um am Ausgangsbereich 82 ein im Wesentlichen geglättetes Gesamtdrehmoment zu erhalten. Im zweiteren Falle, also bei größerer Verzahnung 76 und kleinerer Verzahnung 74, teilt sich entsprechend den Größenverhältnissen das am Eingangsbereich 52 eingeleitete Drehmoment so auf, dass in beiden Drehmomentübertragungswegen 46, 48 ein Drehmomentenfluss der gleichen Richtung erfolgt und die beiden in gleicher Richtung geleiteten Drehmomentanteile in der Kopplungseinrichtung 50 einander überlagert werden.

Durch das Bereitstellen der in Fig. 3 erkennbaren Kupplungsanordnung 28 als in sich geschlossenes System, also das Bereitstellen eines durch das Gehäuse 30 im Wesentlichen abgekapselten Volumens, wird es möglich, die verschiedenen zur Drehschwingungsdämpfung beitragenden Systembereiche durch das in dem Gehäuse 30 im Betrieb vorhandene Fluid vor übermäßigem Verschleiß zu schützen. Dies betrifft vor allem die Kopplungsanordnung 50 bzw. die Planetengetriebeanordnung 68, in welcher die beiden über die Drehmomentübertragungswege 46, 48 geleiteten Drehmomentenanteile zusammengeführt werden. Auch beeinflusst die Bewegung beispielsweise der Planetengetriebeanordnung 68 bzw. auch des Torsionsschwingungsdämpfers 58 in dem Fluid, welches allgemein als viskoses Medium zu betrachten ist, das Dämpfungsverhalten, da durch die Notwendigkeit, Fluid verdrängen zu müssen, Energie dissipiert wird.

Ein derartiger Aufbau der Kupplungsanordnung 28 eignet sich vor allem in Verbindung mit einem Automatikgetriebe, da auf diese Art und Weise die Versorgung des Innenraums 40 mit Fluid sichergestellt werden kann. Dabei kann vorgesehen sein, dass im Automatikgetriebe 10 ein Getriebesteuergerät vorhanden ist, welches verschiedene Ventile ansteuern kann, um den Strömungsweg zum Innenraum 40 des Gehäuses 30 freizugeben bzw. zu unterbrechen. Das Fluid wird dabei durch die vermittels des Gehäuses 30 selbst angetriebene Pumpe aus dem Fluidsumpf abgezogen und dorthin auch wieder zurückgeführt.

Die Fig. 4 zeigt eine Ausgestaltungsform einer nasslaufenden Kupplungsanordnung 28, welche gemäß dem Aufbauprinzip der Fig. 3 realisiert ist. Man erkennt, dass der Reibelemententräger 116 mit dem hier im Wesentlichen die Primärseite 60 des Torsionsschwingungsdämpfers 58 bereitstellenden Zentralscheibenelement 138 verbunden ist. Dieses Zentralscheibenelement 138 bildet insbesondere mit seinem radial inneren Bereich gleichermaßen den Planetenradträger 70, der auf dem Abtriebsorgan 44 gelagert ist.

Die Sekundärseite 62 des Torsionsschwingungsdämpfers 58 umfasst die beiden Deckscheibenelemente 132, 134. Das Deckscheibenelement 134 erstreckt sich nach radial innen und ist auf dem Abtriebsorgan 44 gelagert. Das Deckscheibenelement 132 bildet in seinem radial inneren Bereich das Hohlrad 78, ist mit diesem also beispielsweise durch Umformen eines Blechrohlings integral ausgebildet. Durch die die beiden Deckscheibenelemente 132, 134 miteinander verbindenden Nietbolzen 136 ist auch ein beispielsweise aus Blech geformtes Zusatzmasseteil 84 an die Sekundärseite 62 und somit die Ausgangsseite des Schwingungssystems 66 angebunden. Das Hohlrad 80 ist nach radial innen geführt und dort beispielsweise durch Vernietung mit dem Abtriebsorgan 44 verbunden.

Bei dieser Ausgestaltungsform tragen die beiden sekundärseitigen Deckscheibenelemente 134, 136 zusammen mit dem Masseteil 84 zur Bewegung der Ausgangsmasse bei und beeinflussen somit die Phasenverschiebung der übertragenen Schwingungen.

Die verschiedenen zur axialen Abstützung dienenden Lagerstellen, beispielsweise zur axialen Abstützung des Deckscheibenelements 134 bezüglich des Zentralscheibenelements 138 bzw. eines mit der Gehäuseschale 104 verbundenen Kolbentrageelements 150 sowie auch die axiale Abstützung des Zentralscheibenelements 138 bezüglich des Abtriebsorgans 44, können durch Gleit- oder/und Wälzlagerungen ausgeführt sein. Auch ist grundsätzlich eine Lagerung bezüglich der Getriebeeingangswelle möglich.

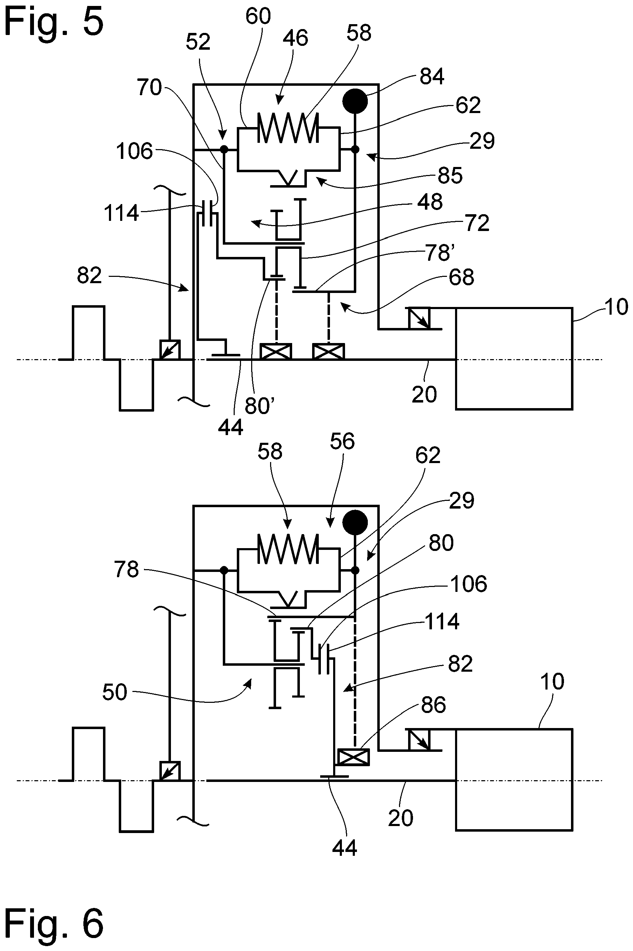

In Fig. 5 ist eine Ausgestaltungsform gezeigt, bei welcher die Planetengetriebeanordnung 68 nicht mit Hohlrädern, sondern mit Sonnenrädern 78' bzw. 80' zur Zusammenwirkung mit den in Umfangsrichtung aufeinander folgend am Planetenradträger 70 im zweiten Drehmomentübertragungsweg 48 getragenen Planetenrädern 72 vorgesehen sind. Die beiden Sonnenräder 78', 80' können nach radial innen hin auf der Getriebeeingangswelle 20 gelagert sein.

Die beiden zur Herstellung des Drehmomentübertragungszustands in Reibeingriff bringbaren Reibflächenformationen 106, 114 liegen hier im Drehmomentenfluss zwischen der allgemein mit 29 bezeichneten Drehschwingungsdämpfungsanordnung und dem Abtriebsorgan 44, sind also beispielsweise in die Ausgangsseite 82 integriert.

Die Fig. 6 zeigt eine Ausgestaltungsvariante, bei welcher die beiden Reibflächenformationen 106, 114 wieder im Wesentlichen in die Ausgangsseite 82 der Drehschwingungsdämpfungsanordnung 29 integriert sind, im Drehmomentenfluss also nach der Phasenschieberanordnung 56 bzw. der Kopplungsanordnung 50 liegen. Die Reibflächenformation 106 ist dabei gemeinsam mit dem Hohlrad 80 drehbar, während die Reibflächenformation 114 mit dem Abtriebsorgan 44 drehbar ist. Die Sekundärseite 62 des Torsionsschwingungsdämpfers 58 bzw. das damit gekoppelte Hohlrad 78 sind über eine Lagerung 86 am Ausgangsbereich 82 oder ggf. auch der Getriebeeingangswelle gelagert.

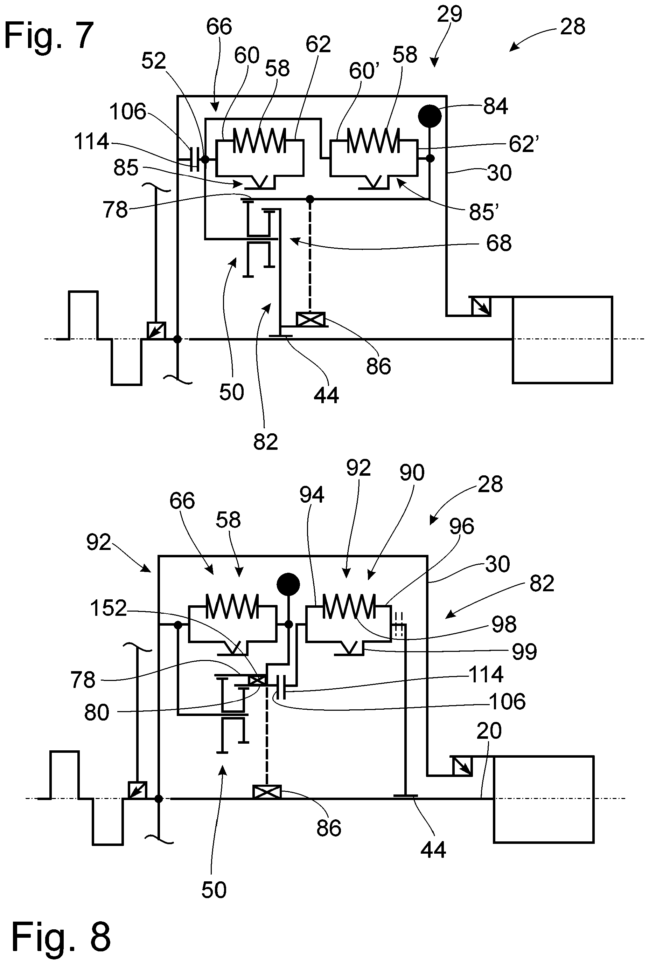

Bei der in Fig. 7 dargestellten Ausgestaltungsvariante einer nasslaufenden Kupplungsanordnung 28 umfasst das Schwingungssystem 66 der Drehschwingungsdämpfungsanordnung 29 zwei zueinander parallel wirksame Torsionsschwingungsdämpfer 58, 58'. Die beiden Primärseiten 60, 60' derselben sind zusammen mit dem Eingangsbereich 52 gekoppelt. Die beiden Sekundärseiten 62, 62' sind mit dem Hohlrad 78 der Kopplungsanordnung 50 bzw. der Planetengetriebeanordnung 68 gekoppelt. An diese beiden Sekundärseiten 62, 62' ist auch die Zusatzmasse 84 angebunden. Ferner können diese über eine Lagerung 86 am Ausgangsbereich 82 gelagert sein.

Die beiden Reibflächenformationen 106, 114 liegen im Drehmomentenfluss vor der Drehschwingungsdämpfungsanordnung 29, sind also dazu ausgebildet, den Eingangsbereich 52 an das Gehäuse 30 zur Drehmomentübertragung anzukoppeln.

Die beiden Torsionsschwingungsdämpfer 58, 58' können, wie in Fig. 7 prinzipartig angedeutet, axial hintereinander angeordnet sein. Gleichwohl ist es möglich, diese radial ineinander geschachtelt zu positionieren bzw. axial und radial zueinander versetzt vorzusehen.

Die Fig. 8 zeigt eine Ausgestaltungsvariante, bei welcher im Drehmomentenfluss zwischen der Kopplungsanordnung 50 und dem Abtriebsorgan 44, also im Wesentlichen im Ausgangsbereich 82, ein weiteres Schwingungssystem 90 vorgesehen ist. Dieses umfasst einen Torsionsschwingungsdämpfer 92 mit einer Primärseite 94, einer Sekundärseite 96 und einer dazwischen wirkenden Federeinheit 98. parallel zur Federeinheit 98 kann eine Reibungsdämpfungsanordnung 99 wirksam sein.

Die Reibflächenformationen 106, 114 sind im Drehmomentenfluss zwischen dem abtriebsseitigen Hohlrad 80 und der Primärseite 94 des weiteren Schwingungssystems 90 angeordnet. Wie durch Strichlinie angedeutet, könnte jedoch auch der Drehmomentenfluss zwischen der Sekundärseite 96 und dem Abtriebsorgan 44 wahlweise unterbrechbar oder herstellbar sein.

Das abtriebsseitige Hohlrad 80 kann über eine Lagerung 86 beispielsweise auf der Getriebeeingangswelle 20 drehbar gelagert sein. Das antriebsseitige Hohlrad 78 kann beispielsweise über eine Lagerung 152 auf dem abtriebsseitigen Hohlrad 80 gelagert sein.

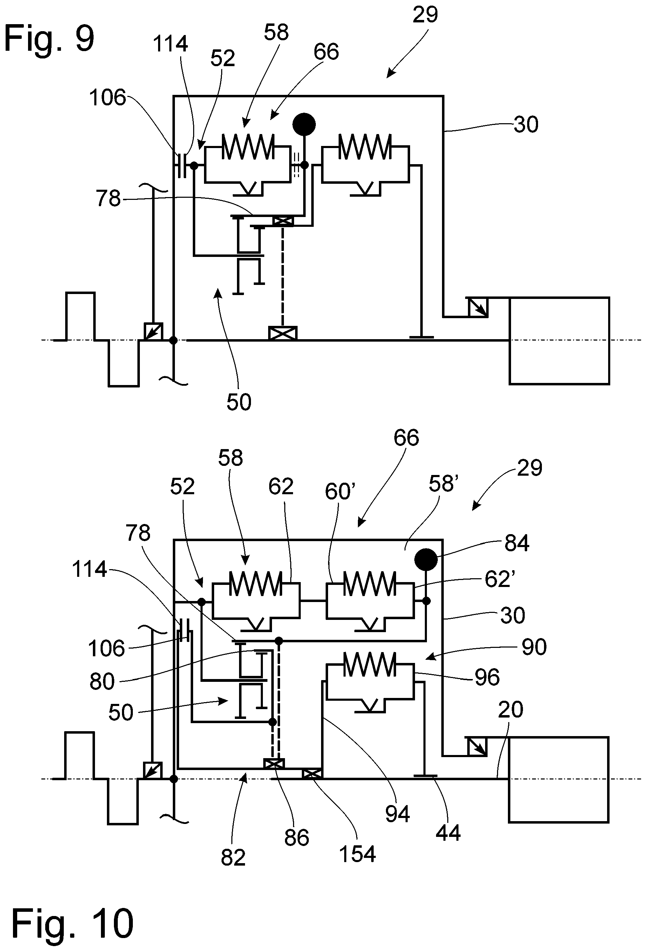

Bei der in Fig. 9 dargestellten Ausgestaltungsvariante, welche hinsichtlich des Grundaufbaus demjenigen der Fig. 8 entspricht, sind die beiden Reibfächenformationen 106, 114 wieder im Drehmomentenfluss zwischen dem Eingangsbereich 52 der Drehschwingungsdämpfungsanordnung 29 und dem Gehäuse 30 angeordnet. Bei einer durch Strichlinien angedeuteten alternativen Variante können die Reibflächenformationen 106, 114 auch im Drehmomentenfluss zwischen der Sekundärseite des Torsionsschwingungsdämpfers 58 bzw. des Schwingungssystems 66 und der Kopplungsanordnung 50 bzw. dem Hohlrad 78 derselben angeordnet sein.

Die Fig. 10 zeigt eine Ausgestaltungsvariante, bei welcher das Schwingungssystem 66 wieder zwei Torsionsschwingungsdämpfer 58, 58' umfasst. Diese sind nunmehr jedoch seriell geschaltet, so dass die Sekundärseite 62 des im Drehmomentenfluss ersten Torsionsschwingungsdämpfers 58 mit der Primärseite 60' des dann folgenden zweiten Torsionsschwingungsdämpfers 58' gekoppelt ist. Dessen Sekundärseite 62', die gleichzeitig auch die Sekundärseite des Schwingungssystems 66 bereitstellt, ist einerseits mit der Zusatzmasse 84 gekoppelt und andererseits an das Hohlrad 78 angebunden. Diese Sekundärseite 62' kann über ein Lager 86 auf der Ausgangsseite 82 der Drehschwingungsdämpfungsanordnung 29 gelagert sein, beispielsweise auch zusammen mit dem Hohlrad 80.

Die beiden Reibflächenformationen 106, 114 sind im Ausgangsbereich 82 vorgesehen, liegen also im Drehmomentenfluss zwischen der Kopplungsanordnung 50 und dem Abtriebsorgan 44. In diesem Ausgangsbereich 82 ist weiterhin das weitere Schwingungssystem 90 angeordnet, dessen Primärseite 94 mit der zweiten Reibflächenformation 114 gekoppelt ist und dessen Sekundärseite 96 mit dem Abtriebsorgan 44 gekoppelt ist. Diese Primärseite 94 und damit auch die zweite Reibflächenformation 114 kann beispielsweise über eine Lagerung 154 auf der Getriebeeingangswelle 20 gelagert sein.

Bei dieser Ausgestaltungsform ist der Eingangsbereich 52 der Drehschwingungsdämpfungsanordnung 29 also fest an das Gehäuse 30 angebunden. Die erste Reibflächenformation 106 ist mit dem Hohlrad 80 gekoppelt und über die Lagerung 86 auch in radialer Richtung positioniert.

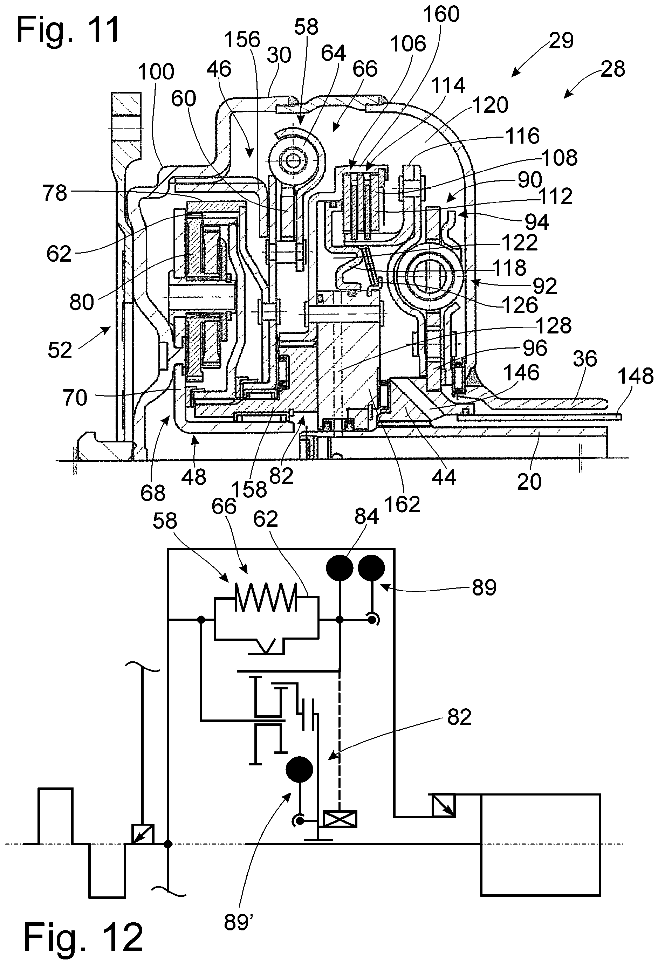

Eine diesem Aufbauprinzip der Fig. 10 entsprechende konstruktive Ausführung ist in Fig. 11 gezeigt. Der Eingangsbereich 52 der Drehschwingungsdämfpungsanordnung 29 wird dabei im Wesentlichen durch die Gehäuseschale 100 des Gehäuses 30 bereitgestellt. An dieses ist einerseits der Planetenradträger 70 beispielsweise durch Vernietung fest angebunden, während andererseits ein zum Schwingungssystem 66 führendes Kopplungselement 156 des ersten Drehmomentübertragungswegs 46 durch Verzahnungseingriff an der Gehäuseschale 100 zur gemeinsamen Drehung gehalten ist. Dieses Kopplungselement 156 ist mit der Primärseite 60 des Torsionsschwingungsdämpfers 58, hier im Wesentlichen mit einem Zentralscheibenelement aufgebaut, angebunden. Die Sekundärseite 62 umfasst zwei Deckscheibenelemente, die mit dem mehrteilig aufgebauten Hohlrad 78 einerseits verbunden sind und andererseits nach radial innen hin auf dem Ausgangsbereich 82 gelagert sind. Das Hohlrad 80 ist mit einem Zwischenelement 158 der Ausgangsseite 82 durch Verzahnungseingriff gekoppelt. In axialer Richtung ist das hier mehrteilig aufgebaute Hohlrad 80 sowohl am Planetenradträger 70 als auch an der Sekundärseite 62 des Torsionsschwingungsdämpfers 58 gelagert, die in axialer Richtung wiederum am Zwischenelement 158 abgestützt ist. Nach radial innen hin ist das Zwischenelement 158 auf einem axialen Ansatz des Planetenradträgers 70 gelagert.

Mit dem Zwischenelement 158 ist durch Verzahnungseingriff mit einem Reibelemententräger 160 gekoppelt, welcher die ersten Reibelemente 108 der ersten Reibflächenformation 106 radial außen umgibt und mit diesen durch Verzahnungseingriff gekoppelt ist. Der Reibelemententräger 116 der zweiten Reibflächenformation 114 ist an die zwei Deckscheibenelemente umfassende Primärseite 94 des Torsionsschwingungsdämpfers 92 des weiteren Schwingungssystems 90 angebunden. Dessen Sekundärseite 96, hier bereitgestellt durch ein Zentralscheibenelement, ist an das Abtriebsorgan 44 angebunden.

Mit dem Reibelemententräger 160 ist ein weiteres Zwischenelement 162 beispielsweise durch Vernietung fest verbunden. Dieses weist die Kanäle 128 zur Zuführung von Fluid in den zweiten Raumbereich 122 auf, der hier im Wesentlichen zwischen dem Kupplungskolben 118 und dem Reibelemententräger 160 begrenzt ist. Radial innen umgibt das Zwischenelement 162 den axialen Endbereich der Getriebeeingangswelle 20 und steht somit in Fluidaustauschverbindung mit dieser. Ein fluiddichter Anschluss der Kanäle 128 an die Getriebeeingangswelle 20 erfolgt durch am Innenumfang des Zwischenelements 162 vorgesehene dynamische Dichtungen. Diese können mit leichter Vorpressung auf der Getriebeeingangswelle festgelegt sein, so dass ein radialer Versatz zwischen der Getriebeeingangswelle 20 und dem Zwischenelement 162 bzw. der nasslaufenden Kupplungsanordnung 28 kompensiert werden kann. Grundsätzlich können diese Dichtungselemente auch in Nuten am Außenumfang der Getriebeeingangswelle bzw. am Innenumfang des Zwischenelements 162 angeordnet sein.

Die Zufuhr von Fluid bzw. Öl in den zweiten Raumbereich 120 kann über die Kanäle 146 im Abtriebsorgan 44 erfolgen. Hierzu ist zwischen der Hülse 148 und der Getriebeeingangswelle 20 ein radialer Strömungskanal gebildet, welcher durch fluiddichten Anschluss des Abtriebsorgans 44 an die Hülse 148 vermittels einer dynamischen Dichtung oder dergleichen abgeschlossen ist bezüglich eines Strömungskanals, welcher zwischen der Pumpenantriebsnabe 36 und der Hülse 148 gebildet ist.

Das Abtriebsorgan 44 ist axial bezüglich des Zwischenelements 162 einerseits und über das weitere Schwingungssystem 90 axial bezüglich des Gehäuses 30 andererseits über jeweilige Lagerungen abgestützt. Es sei darauf hingewiesen, dass alle vorangehend angesprochenen Lagerungen als Wälzkörperlagerungen, gleichwohl jedoch auch als Gleitlager ausgebildet sein können. Weiter ist es selbstverständlich möglich, die Lagerstellen zu variieren, so könnte beispielsweise das Zwischenelement 148 nach radial innen hin auch auf der sich noch weiter erstreckenden Getriebeeingangswelle 20 gelagert sein.

Eine weitere abgewandelte Ausgestaltungsform ist in Fig. 12 in prinzipartiger Art dargestellt. Diese entspricht in konstruktiver Hinsicht im Wesentlichen dem vorangehend bereits mit Bezug auf die Fig. 6 beschriebenen Aufbau. Man erkennt, dass hier zusätzlich zur Zusatzmasse 84 an die Sekundärseite 62 des Schwingungssystems 66 bzw. des Torsionsschwingungsdämpfers 58 eine Schwingungsdämpfungsanordnung 89 angebunden ist. Auch an den Ausgangsbereich 82 ist eine Schwingungsdämpfungsanordnung 89' angebunden. Diese Schwingungsanordnungen 89 bzw. 89' können als drehzahladaptiver Tilger ausgebildet sein mit einer oder mehreren Auslenkungsmassen, die entlang jeweiliger in Umfangsrichtung sich erstreckender Führungsbahnen auslenkbar sind. Diese Führungsbahnen weisen Scheitelbereiche auf, in welchen sie den größten Abstand zur Drehachse A haben. Bei Auslenkung der Auslenkungsmassen aus diesen Scheitelbereichen bewegen sie sich nicht nur in Umfangsrichtung, sondern werden radial nach innen geführt, so dass sie dabei potentielle Energie aufnehmen. Durch die Geometrie dieser Führungsbahnen und die Auswahl der Massen der Auslenkungsmassen wird es möglich, eine Abstimmung auf eine anregende Schwingung bzw. höhere Ordnungen, beispielsweise die Zündfrequenz, zu erreichen. Alternativ wäre es auch möglich, eine derartige Schwingungsdämpfungsanordnung 89, 89' als Festfrequenztilger zu gestalten. Hierzu können eine oder mehrere Schwungmassen vorgesehen sein. Diese sind entgegen der Rückstellkraft von Federn, allgemein als elastischen Elementen, auslenkbar, so dass durch die Auswahl der Massen einerseits und der Federkonstanten andererseits eine Abstimmung auf eine zu bedämpfende Frequenz vorgesehen sein kann.

Es sei darauf hingewiesen, dass selbstverständlich eine oder mehrere dieser Schwingungsdämpfungsanordnungen 89 bzw. 89' auch bei den anderen Ausgestaltungsformen zur Beeinflussung des Schwingungsverhaltens entweder in Kombination oder einzeln und auch an anderer Positionierung vorgesehen sein können.

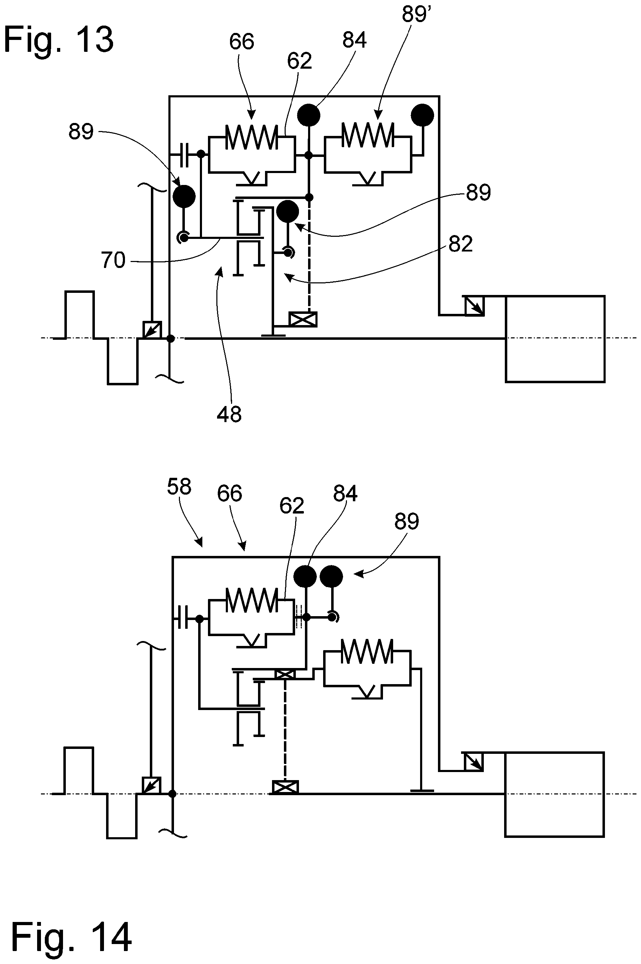

Eine weitere Variante ist in Fig. 13 gezeigt. Diese entspricht hinsichtlich ihres grundsätzlichen konstruktiven Aufbaus der mit Bezug auf die Fig. 1 beschriebenen Ausgestaltungsform. Hier sind beispielsweise an den Planetenradträger 70 des zweiten Drehmomentübertragungswegs 48 und die Ausgangsseite 82 jeweils mit dem Bezugszeichen 89 bezeichnete drehzahladaptive Tilger angekoppelt. An die Sekundärseite 62 des Schwingungssystems 66 ist eine als Festfrequenztilger ausgebildete Schwingungsdämpfungsanordnung 89' angebunden.

Die in Fig. 14 dargestellte Ausgestaltungsvariante entspricht im Wesentlichen der mit Bezug auf die Fig. 9 bereits Beschriebenen. Auch hier ist an die Sekundärseite 62 des Schwingungssystems 66 bzw. des Torsionsschwingungsdämpfer 58 eine Schwingungsdämpfungsanordnung 89, diese beispielsweise ausgebildet als Festfrequenztilger oder als drehzahladaptiver Tilger, angekoppelt. Diese Schwingungsdämpfungsanordnung 89 kann alternativ oder zusätzlich zur Zusatzmasse 84 vorgesehen sein.

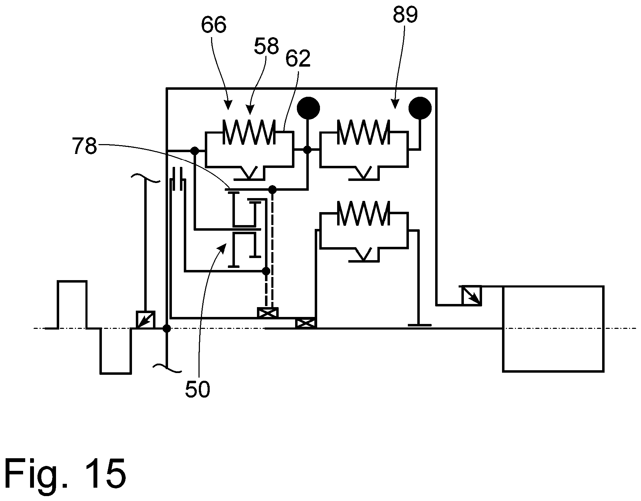

In Fig. 15 ist eine Ausgestaltungsvariante gezeigt, welche im Wesentlichen auf dem in Fig. 10 gezeigten Prinzip aufbaut. Das Schwingungssystem 66 umfasst hier jedoch nur einen einzigen Torsionsschwingungsdämpfer 58, dessen Sekundärseite 62 an das Hohlrad 78 der Kopplungsanordnung 50 angekoppelt ist. Mit dieser Sekundärseite 62 ist jedoch eine Schwingungsdämpfungsanordnung 89, hier ausgebildet als Festfrequenztilger, also mit einer gegen die Rückstellwirkung einer oder mehreren Federn auslenkbaren, grundsätzlich jedoch frei schwingenden Masse aufgebaut. Für diese Feder können wieder verschiedene Bauformen, beispielsweise eine Schraubendruck- oder -zugfeder, beispielsweise aufgebaut aus Stahlmaterial, oder auch elastisches Material, wie z. B. Gummimaterial, ausgewählt werden.

Ferner ist zu betonen, dass aufgrund der Tatsache, dass bei Wirksamkeit der Drehschwingungsdämpfungsanordnung eine Relativdrehung des Eingangsbereichs bezüglich des Ausgangsbereichs derselben lediglich in einem durch die Elastizität des Schwingungssystem bestimmten Winkelbereich erfolgen wird. Dies bedeutet, dass auch die Kopplungsanordnung lediglich vergleichsweise kleine Relativdrehbewegungen zwischen den Planetenrädern einerseits und den Hohlrädern bzw. Sonnenrädern andererseits erfahren wird. Obgleich aus Symmetriegründen und aufgrund des vergleichsweise einfachen Aufbaus die Ausgestaltung der Planetenräder, der Hohlräder bzw. der Sonnenräder als jeweils um deren Drehachsen vollständig umlaufende Räder ausgebildet sein können, ist es gleichwohl möglich, hier Segmenträder sowohl für die Planetenräder einerseits, als auch die Hohlräder bzw. Sonnenräder andererseits einzusetzen, wobei die Segmente derart dimensioniert sind, dass sie die erforderliche Relativdrehbarkeit unter Beibehalt des Verzahnungseingriffs zulassen.

## Patentansprüche

1. Nasslaufende Kupplungsanordnung, insbesondere für den Antriebsstrang eines Fahrzeugs, umfassend eine mit Fluid gefüllte oder füllbare Gehäuseanordnung (30), eine mit der Gehäuseanordnung (30) um eine Drehachse (A) drehbare erste Reibflächenformation (106), eine mit einem Abtriebsorgan (44) um die Drehachse (A) drehbare und durch einen Kupplungskolben (118) in Reibeingriff mit der ersten Reibflächenformation (106) bringbare zweite Reibflächenformation (114), wobei im Drehmomentübertragungsweg zwischen der Gehäuseanordnung (30) und dem Abtriebsorgan (44) wenigstens ein Teil einer Drehschwingungsdämpfungsanordnung (29) vorgesehen ist, diese umfassend einen Eingangsbereich (52) und einen Ausgangsbereich (82), wobei zwischen dem Eingangsbereich (52) und dem Ausgangsbereich (82) ein erster Drehmomentübertragungsweg (46) und parallel dazu ein zweiter Drehmomentübertragungsweg (48) sowie eine Kopplungsanordnung (50) zur Überlagerung der über die Drehmomentübertragungswege (46, 48) geleiteten Drehmomente vorgesehen sind, wobei die Drehschwingungsdämpfungsanordnung ferner wenigstens im ersten Drehmomentübertragungsweg (46) eine Phasenschieberanordnung (56) umfasst zur Erzeugung einer Phasenverschiebung von über den ersten Drehmomentübertragungsweg (46) geleiteten Drehungleichförmigkeiten bezüglich über den zweiten Drehmomentübertragungsweg geleiteten Drehungleichförmigkeiten, **dadurch gekennzeichnet, dass** die nasslaufende Kupplungsanordnung so ausgebildet ist, dass durch ein Aufheben des Reibeingriffs zwischen den Reibflächenformationen (106, 114) im Wesentlichen kein Drehmoment über die nasslaufende Kupplungsanordnung übertragen wird.

2. Nasslaufende Kupplungsanordnung nach Anspruch 1, **dadurch gekennzeichnet, dass** die erste Reibflächenformation (106) und die zweite Reibflächenformation (114) in Drehmomentenfluss zwischen der Gehäuseanordnung (30) und der Drehschwingungsdämpfungsanordnung (29) oder zwischen der Drehschwingungsdämpfungsanordnung (29) und dem Abtriebsorgan (44) vorgesehen sind.

3. Nasslaufende Kupplungsanordnung nach Anspruch 1, **dadurch gekennzeichnet, dass** die erste Reibflächenformation (106) und die zweite Reibflächenformation (114) im Drehmomentenfluss zwischen der Phasenschieberanordnung (96) und der Kopplungsanordnung (50) vorgesehen sind.

4. Nasslaufende Kupplungsanordnung nach Anspruch 1, **dadurch gekennzeichnet, dass** die erste Reibflächenformation (106) und die zweite Reibflächenformation (114) im Drehmomentenfluss zwischen der Gehäuseanordnung (30) und der Kopplungsanordnung (50) vorgesehen sind.

5. Nasslaufende Kupplungsanordnung nach einem der Ansprüche 1 bis 4, **dadurch gekennzeichnet, dass** jede Reibflächenformation (106, 114) wenigstens ein mit einem ringscheibenartigen Reibelement (108, 112) der anderen Reibflächenformation (106, 114) durch den Kupplungskolben (118) in Reibeingriff pressbares ringscheibenartiges Reibelement (108, 112) umfasst.

6. Nasslaufende Kupplungsanordnung nach einem der Ansprüche 1 bis 5, **dadurch gekennzeichnet, dass** die Phasenschieberanordnung (56) ein Schwingungssystem (66) mit einer Primärseite (60) und einer gegen die Wirkung einer Federanordnung (64; 64, 64') bezüglich der Primärseite (60) um die Drehachse (A) drehbaren Sekundärseite (62; 62') umfasst.

7. Nasslaufende Kupplungsanordnung nach einem der Ansprüche 1 bis 6, **dadurch gekennzeichnet, dass** der Ausgangsbereich (82) ein weiteres Schwingungssystem (90) mit einer Primärseite (94) und einer gegen die Wirkung einer Federanordnung (98) bezüglich der Primärseite (94) drehbaren Sekundärseite (96) umfasst.

8. Nasslaufende Kupplungsanordnung nach einem der Ansprüche 1 bis 7, **dadurch gekennzeichnet, dass** das Abtriebsorgan (44) eine mit einer Abtriebswelle (20), vorzugsweise Getriebeeingangswelle (20), zur gemeinsamen Drehung um die Drehachse (A) gekoppelte oder koppelbare Abtriebsnabe (44) umfasst.

9. Nasslaufende Kupplungsanordnung nach einem der Ansprüche 1 bis 8, **dadurch gekennzeichnet, dass** die Gehäuseanordnung (30) eine Antriebsformation (36) zum Antreiben einer Fluidpumpe zum Fördern von Fluid in die Gehäuseanordnung (30) umfasst.

10. Nasslaufende Kupplungsanordnung nach einem der Ansprüche 1 bis 9, **dadurch gekennzeichnet, dass** die Kopplungsanordnung (50) eine Planetengetriebeanordnung (68) umfasst.

11. Nasslaufende Kupplungsanordnung nach Anspruch 10, **dadurch gekennzeichnet, dass** die Planetengetriebeanordnung (68) einen an den zweiten Drehmomentübertragungsweg (48) angebundenen Planetenradträger (70) mit einer Mehrzahl von daran drehbar getragenen Planetenrädern (72) umfasst.

12. Nasslaufende Kupplungsanordnung nach Anspruch 11, **dadurch gekennzeichnet, dass** die Planetengetriebeanordnung (68) eine an den ersten Drehmomentübertragungsweg (46) angebundene erste Koppelradanordnung (78; 78') in Kämmeingriff mit den Planetenrädern (72) und eine an den Ausgangsbereich (82) angebundene zweite Koppelradanordnung (80; 80') in Kämmeingriff mit den Planetenrädern (72) umfasst.

13. Nasslaufende Kupplungsanordnung nach Anspruch 12, **dadurch gekennzeichnet, dass** die erste Koppelradanordnung (78; 78') in Verbindung mit den Planetenrädern (72) und die zweite Koppelradanordnung (80; 80') in Verbindung mit den Planetenrädern (72) zueinander unterschiedliche Übersetzungsverhältnisse bereitstellen.

14. Nasslaufende Kupplungsanordnung nach einem der Ansprüche 12 bis 13, **dadurch gekennzeichnet, dass** die erste Koppelradanordnung (78) und die zweite Koppelradanordnung (80) jeweils eine Hohlradanordnung (78, 80) umfassen.

15. Nasslaufende Kupplungsanordnung nach einem der Ansprüche 12 bis 13, **dadurch gekennzeichnet, dass** die erste Koppelradanordnung (78') und die zweite Koppelradanordnung (80') jeweils eine Sonnenradanordnung (78', 80') umfasst.

16. Nasslaufende Kupplungsanordnung nach einem der Ansprüche 1 bis 15, **dadurch gekennzeichnet, dass** ein Schwingungssystem (66) oder/und ein weiteres Schwingungssystem (90) wenigstens zwei zueinander seriell angeordnete Schwingungsdämpfer (58, 58') jeweils mit einer Primärseite (60, 60') und einer bezüglich dieser drehbaren Sekundärseite (62, 62') umfasst.

17. Nasslaufende Kupplungsanordnung nach einem der Ansprüche 1 bis 16, **dadurch gekennzeichnet, dass** das Schwingungssystem (66) oder/und das weitere Schwingungssystem (90) wenigstens zwei zueinander parallel wirksame Schwingungsdämpfer jeweils mit einer Primärseite und einer bezüglich dieser drehbaren Sekundärseite umfasst.

18. Nasslaufende Kupplungsanordnung nach einem der Ansprüche 1 bis 17, **dadurch gekennzeichnet, dass** das Schwingungssystem (66) oder/und das weitere Schwingungssystem (90) eine drehzahladaptive Schwingungsdämpfungsanordnung (89, 89') mit wenigstens einer in Umfangsrichtung aus einer Grundlage auslenkbaren und dabei ihren Abstand zur Drehachse (A) verändernde Auslenkungsmasse umfasst.

19. Nasslaufende Kupplungsanordnung nach einem der Ansprüche 1 bis 18, **dadurch gekennzeichnet, dass** das Schwingungssystem (66) oder/und das weitere Schwingungssystem (90) eine Festfrequenz-Schwingungsdämpfungsanordnung (89, 89') mit wenigstens einer gegen die Wirkung einer Rückstellfederanordnung (116) auslenkbaren Schwingungsmasse (114) umfasst.

20. Nasslaufende Kupplungsanordnung nach einem der Ansprüche 1 bis 19, **dadurch gekennzeichnet, dass** dem Schwingungssystem (66) oder/und das weiteren Schwingungssystem (90) eine einer Relativdrehung zwischen Primärseite (60, 94) und Sekundärseite (62, 96; 62') desselben entgegenwirkende Reibungsdämpfungsanordnung (85, 85', 99) zugeordnet ist.

## Claims

1. Wet-running clutch arrangement, in particular for the drive train of a vehicle, comprising a housing arrangement (30) which is filled or can be filled with fluid, a first friction face formation (106) which can be rotated with the housing arrangement (30) about the rotational axis (A), a second friction face formation (114) which can be rotated with an output member (44) about the rotational axis (A) and can be brought into frictional engagement with the first friction face formation (106) by way of a clutch piston (118), at least one part of a torsional vibration damping arrangement (29) being provided in the torque transmission path between the housing arrangement (30) and the output member (44), the said torsional vibration damping arrangement (29) comprising an input region (52) and an output region (82), a first torque transmission path (46) and, parallel thereto, a second torque transmission path (48) and a coupling arrangement (50) for superimposing the torques which are conducted via the torque transmission paths (46, 48) being provided between the input region (52) and the output region (82), the torsional vibration damping arrangement comprising, furthermore, a phase shifter arrangement (56) at least in the first torque transmission path (46), for producing a phase shift of rotational non-uniformities which are conducted via the first torque transmission path (46) with regard to rotational non-uniformities which are conducted via the second torque transmission path, **characterized in that** the wet-running clutch arrangement is configured in such a way that substantially no torque is transmitted via the wet-running clutch arrangement as a result of a cancellation of the frictional engagement between the friction face formations (106, 114).

2. Wet-running clutch arrangement according to Claim 1, **characterized in that** the first friction face formation (106) and the second friction face formation (114) are provided in the torque flow between the housing arrangement (30) and the torsional vibration damping arrangement (29) or between the torsional vibration damping arrangement (29) and the output member (44).

3. Wet-running clutch arrangement according to Claim 1, **characterized in that** the first friction face formation (106) and the second friction face formation (114) are provided in the torque flow between the phase shifter arrangement (96) and the coupling arrangement (50).

4. Wet-running clutch arrangement according to Claim 1, **characterized in that** the first friction face formation (106) and the second friction face formation (114) are provided in the torque flow between the housing arrangement (30) and the coupling arrangement (50).

5. Wet-running clutch arrangement according to one of Claims 1 to 4, **characterized in that** each friction face formation (106, 114) comprises at least one annular disc-like friction element (108, 112) which can be pressed into frictional engagement with an annular disc-like friction element (108, 112) of the other friction face formation (106, 114) by way of the clutch piston (118).

6. Wet-running clutch arrangement according to one of Claims 1 to 5, **characterized in that** the phase shifter arrangement (56) comprises a vibration system (66) with a primary side (60) and a secondary side (62; 62') which can be rotated about the rotational axis (A) with regard to the primary side (60) counter to the action of a spring arrangement (64; 64, 64').

7. Wet-running clutch arrangement according to one of Claims 1 to 6, **characterized in that** the output region (82) comprises a further vibration system (90) with a primary side (94) and a secondary side (96) which can be rotated with regard to the primary side (94) counter to the action of a spring arrangement (98).

8. Wet-running clutch arrangement according to one of Claims 1 to 7, **characterized in that** the output member (44) comprises an output hub (44) which is coupled or can be coupled to an output shaft (20), preferably a transmission input shaft (20), for common rotation about the rotational axis (A).

9. Wet-running clutch arrangement according to one of Claims 1 to 8, **characterized in that** the housing arrangement (30) comprises a drive formation (36) for driving a fluid pump for delivering fluid into the housing arrangement (30).

10. Wet-running clutch arrangement according to one of Claims 1 to 9, **characterized in that** the coupling arrangement (50) comprises a planetary gear mechanism arrangement (68).

11. Wet-running clutch arrangement according to Claim 10, **characterized in that** the planetary gear mechanism arrangement (68) comprises a planetary gear carrier (70) with a plurality of planetary gears (72) which are supported rotatably thereon, which planetary gear carrier (70) is attached to the second torque transmission path (48).

12. Wet-running clutch arrangement according to Claim 11, **characterized in that** the planetary gear mechanism arrangement (68) comprises a first coupling gear arrangement (78; 78') which is attached to the first torque transmission path (46) and is in meshing engagement with the planetary gears (72), and a second coupling gear arrangement (80; 80') which is attached to the output region (82) and is in meshing engagement with the planetary gears (72).

13. Wet-running clutch arrangement according to Claim 12, **characterized in that** the first coupling gear arrangement (78; 78') in connection with the planetary gears (72) and the second coupling gear arrangement (80; 80') in connection with the planetary gears (72) have transmission ratios which are different from one another.

14. Wet-running clutch arrangement according to either of Claims 12 and 13, **characterized in that** the first coupling gear arrangement (78) and the second coupling gear arrangement (80) in each case comprise an internal gear arrangement (78, 80).

15. Wet-running clutch arrangement according to either of Claims 12 and 13, **characterized in that** the first coupling gear arrangement (78') and the second coupling gear arrangement (80') in each case comprise a sun gear arrangement (78', 80').

16. Wet-running clutch arrangement according to one of Claims 1 to 15, **characterized in that** a vibration system (66) and/or a further vibration system (90) comprise/comprises at least two vibration dampers (58, 58') which are arranged in series with respect to one another, in each case having a primary side (60, 60') and a secondary side (62, 62') which can be rotated with regard to the said primary side (60, 60').

17. Wet-running clutch arrangement according to one of Claims 1 to 16, **characterized in that** the vibration system (66) and/or the further vibration system (90) comprise/comprises at least two vibration dampers which act in parallel to one another, in each case having a primary side and a secondary side which can be rotated with regard to the said primary side.

18. Wet-running clutch arrangement according to one of Claims 1 to 17, **characterized in that** the vibration system (66) and/or the further vibration system (90) comprise/comprises a rotational-speed-adaptive vibration damping arrangement (89, 89') with at least one deflection mass which can be deflected in the circumferential direction out of a basic position and in the process changes its spacing from the rotational axis (A).

19. Wet-running clutch arrangement according to one of Claims 1 to 18, **characterized in that** the vibration system (66) and/or the further vibration system (90) comprise/comprises a fixed frequency vibration damping arrangement (89, 89') with at least one vibration mass (114) which can be deflected counter to the action of a restoring spring arrangement (116).

20. Wet-running clutch arrangement according to one of Claims 1 to 19, **characterized in that** the vibration system (66) and/or the further vibration system (90) are/is assigned a friction damping arrangement (85, 85', 99) which counteracts a relative rotation between the primary side (60, 94) and a secondary side (62, 96; 62') of the said vibration system (66) and/or the said further vibration system (90).

## Revendications

1. Agencement d'embrayage humide, en particulier pour la chaîne cinématique d'un véhicule, comprenant un agencement de boîtier (30) rempli ou pouvant être rempli de fluide, une première formation de surface de friction (106) pouvant tourner avec l'agencement de boîtier (30) autour d'un axe de rotation (A), une deuxième formation de surface de friction (114) pouvant tourner avec un organe de sortie (44) autour de l'axe de rotation (A) et pouvant être amenée en engagement de friction avec la première formation de surface de friction (106), au moins une partie d'un agencement d'amortissement des oscillations de torsion (29) étant prévue dans la voie de transfert de couple entre l'agencement de boîtier (30) et l'organe de sortie (44), ledit agencement d'amortissement comprenant une région d'entrée (52) et une région de sortie (82), entre la région d'entrée (52) et la région de sortie (82) étant prévus une première voie de transfert de couple (46) et, parallèlement à celle-ci, une deuxième voie de transfert de couple (48) ainsi qu'un agencement de couplage (50) pour la superposition des couples transmis par le biais des voies de transfert de couple (46, 48), l'agencement d'amortissement des oscillations de torsion comprenant en outre au moins, dans la première voie de transfert de couple (46), un agencement de déphaseur (56) pour générer un déphasage des irrégularités de rotation transmises par le biais de la première voie de transfert de couple (46) par rapport aux irrégularités de rotation transmises par le biais de la deuxième voie de transfert de couple, **caractérisé en ce que** l'agencement d'embrayage humide est réalisé de telle sorte que essentiellement aucun couple ne soit transmis par le biais de l'agencement d'embrayage humide si l'engagement par friction entre les formations de surface de friction (106, 114) est supprimé.

2. Agencement d'embrayage humide selon la revendication 1, **caractérisé en ce que** la première formation de surface de friction (106) et la deuxième formation de surface de friction (114) sont prévus dans le flux de couple entre l'agencement de boîtier (30) et l'agencement d'amortissement des oscillations de torsion (29) ou entre l'agencement d'amortissement des oscillations de torsion (29) et l'organe de sortie (44).

3. Agencement d'embrayage humide selon la revendication 1, **caractérisé en ce que** la première formation de surface de friction (106) et la deuxième formation de surface de friction (114) sont prévues dans le flux de couple entre l'agencement de déphaseur (96) et l'agencement de couplage (50).

4. Agencement d'embrayage humide selon la revendication 1, **caractérisé en ce que** la première formation de surface de friction (106) et la deuxième formation de surface de friction (114) sont prévues dans le flux de couple entre l'agencement de boîtier (30) et l'agencement de couplage (50).

5. Agencement d'embrayage humide selon l'une quelconque des revendications 1 à 4, **caractérisé en ce que** chaque formation de surface de friction (106, 114) comprend au moins un élément de friction (108, 112) de type disque annulaire pouvant être pressé en engagement de friction avec un élément de friction de type disque annulaire (108, 112) de l'autre formation de surface de friction (106, 114) par le piston d'embrayage (118).

6. Agencement d'embrayage humide selon l'une quelconque des revendications 1 à 5, **caractérisé en ce que** l'agencement de déphaseur (56) comprend un système oscillant (66) avec un côté primaire (60) et un côté secondaire (62 ; 62') pouvant tourner autour de l'axe de rotation (A) par rapport au côté primaire (60) à l'encontre de l'effet d'un agencement de ressort (64 ; 64, 64').

7. Agencement d'embrayage humide selon l'une quelconque des revendications 1 à 6, **caractérisé en ce que** la région de sortie (82) comprend un système oscillant supplémentaire (90) avec un côté primaire (94) et un côté secondaire (96) pouvant tourner par rapport au côté primaire (94) à l'encontre de l'effet d'un agencement de ressort (98).

8. Agencement d'embrayage humide selon l'une quelconque des revendications 1 à 7, **caractérisé en ce que** l'organe de sortie (44) comprend un moyeu de sortie (44) accouplé ou pouvant être accouplé à un arbre de sortie (20), de préférence un arbre d'entrée de boîte de vitesses (20), en vue de la rotation commune autour de l'axe de rotation (A).

9. Agencement d'embrayage humide selon l'une quelconque des revendications 1 à 8, **caractérisé en ce que** l'agencement de boîtier (30) comprend une formation d'entraînement (36) pour l'entraînement d'une pompe fluidique destinée à refouler du fluide dans l'agencement de boîtier (30).

10. Agencement d'embrayage humide selon l'une quelconque des revendications 1 à 9, **caractérisé en ce que** l'agencement de couplage (50) comprend un agencement de transmission planétaire (68).

11. Agencement d'embrayage humide selon la revendication 10, **caractérisé en ce que** l'agencement d'engrenage planétaire (68) comprend un porte-satellites (70) relié à la deuxième voie de transfert de couple (48), avec une pluralité de satellites (72) supportés à rotation sur celui-ci.

12. Agencement d'embrayage humide selon la revendication 11, **caractérisé en ce que** l'agencement d'engrenage planétaire (68) comprend un premier agencement de roue de couplage (78 ; 78') relié à la première voie de transfert de couple (46) en engagement d'engrènement avec les satellites (72) et un deuxième agencement de roue de couplage (80 ; 80') relié à la région de sortie (82) en engagement d'engrènement avec les satellites (72).

13. Agencement d'embrayage humide selon la revendication 12, **caractérisé en ce que** le premier agencement de roue de couplage (78 ; 78') en liaison avec les satellites (72) et le deuxième agencement de roue de couplage (80 ; 80') en liaison avec les satellites (72) fournissent des rapports de démultiplication différents l'un de l'autre.

14. Agencement d'embrayage humide selon l'une quelconque des revendications 12 à 13, **caractérisé en ce que** le premier agencement de roue de couplage (78) et le deuxième agencement de roue de couplage (80) comprennent chacun un agencement de couronne dentée (78, 80).

15. Agencement d'embrayage humide selon l'une quelconque des revendications 12 à 13, **caractérisé en ce que** le premier agencement de roue de couplage (78') et le deuxième agencement de roue de couplage (80') comprennent chacun un agencement de roue solaire (78, 80').

16. Agencement d'embrayage humide selon l'une quelconque des revendications 1 à 15, **caractérisé en ce qu'**un système oscillant (66) et/ou un système oscillant supplémentaire (90) comprennent au moins deux amortisseurs d'oscillations disposés en série l'un par rapport à l'autre (58, 58') à chaque fois avec un côté primaire (60, 60') et un côté secondaire (62, 62') pouvant tourner par rapport à celui-ci.

17. Agencement d'embrayage humide selon l'une quelconque des revendications 1 à 16, **caractérisé en ce que** le système oscillant (66) et/ou le système oscillant supplémentaire (90) comprennent au moins deux amortisseurs d'oscillations agissant parallèlement l'un à l'autre à chaque fois avec un côté primaire et un côté secondaire pouvant tourner par rapport à celui-ci.

18. Agencement d'embrayage humide selon l'une quelconque des revendications 1 à 17, **caractérisé en ce que** le système oscillant (66) et/ou le système oscillant supplémentaire (90) comprennent un agencement d'amortissement des oscillations à vitesse de rotation adaptative (89, 89') avec au moins une masse de déviation pouvant être déviée dans la direction périphérique à partir d'une position de base et variant ainsi sa distance à l'axe de rotation (A).

19. Agencement d'embrayage humide selon l'une quelconque des revendications 1 à 18, **caractérisé en ce que** le système oscillant (66) et/ou le système oscillant supplémentaire (90) comprennent un agencement d'amortissement des oscillations à fréquence fixe (89, 89') avec au moins une masse oscillante (114) pouvant être déviée à l'encontre de l'action d'un agencement de ressort de rappel (116).

20. Agencement d'embrayage humide selon l'une quelconque des revendications 1 à 19, **caractérisé en ce qu'**un agencement d'amortissement de friction (85, 85', 99) agissant à l'encontre d'une rotation relative entre le côté primaire (60, 94) et le côté secondaire (62, 96 ; 62') de celui-ci est associé au système oscillant (66) et/ou au système oscillant supplémentaire (90).
